## Europäisches Patentamt

## European Patent Office

## Office européen des brevets

(11) Numéro de publication: **0 202 134**
**B1**

(12)

# FASCICULE DE BREVET EUROPEEN

(45) Date de publication du fascicule du brevet:
08.11.89

(51) Int. Cl.⁴: **G01N 29/00**

(21) Numéro de dépôt: 86400727.3

(22) Date de dépôt: 04.04.86

(54) Dispositif de contrôle par ultra-sons pourvu d'un organe de roulement.

(30) Priorité: 17.04.85 FR 8505826

(43) Date de publication de la demande:
20.11.86 Bulletin 86/47

(45) Mention de la délivrance du brevet:
08.11.89 Bulletin 89/45

(84) Etats contractants désignés:
AT BE CH DE GB IT LI NL SE

(56) Documents cités:
EP-A- 0 106 527
EP-A- 0 133 741
FR-A- 1 325 885
FR-A- 1 591 555
US-A- 4 472 974

PATENTS ABSTRACTS OF JAPAN,
vol. 6, no. 175 (P-141)[1053], 9th September 1982; & JP -
A - 57 90 154 (DORYOKURO KAKUNENRYO KAIHATSU
JIUYODAN) 04-06-1982

(73) Titulaire: AEROSPATIALE Société Nationale
Industrielle, 37, Boulevard de Montmorency,
F-75781 Paris Cédex 16(FR)

(72) Inventeur: Lecuru, Daniel, 1, rue Godefroy,
F-92800 Puteaux(FR)
Inventeur: Choffy, Jean-Pierre, 1, Allée des Charmes,
F-92500 Rueil-Malmaison(FR)

(74) Mandataire: Bonnetat, Christian et al, Cabinet PROPI
Conseils 23 rue de Léningrad, F-75008 Paris(FR)

## Description

La présente invention concerne un dispositif de contrôle par ultra-sons, pourvu d'un organe de roulement. Quoiqu'elle puisse être mise en oeuvre dans de nombreuses applications, elle est plus particulièrement expliquée ci-après en rapport avec une application particulière concernant l'examen non destructif des jonctions collées des panneaux constituant la peau du fuselage d'un aéronef.

On sait que la peau du fuselage d'un aéronef est constituée par des panneaux individuels en alliage léger assemblés par des collages, eux-mêmes renforcés par des jonctions à rivets.

De telles jonctions rivées et collées fatiguent beaucoup au cours de l'utilisation de l'aéronef, notamment du fait des cycles de compression et de décompression auxquels est soumis le fuselage. Il peut en résulter des zones de décollement se développant à partir de petits défauts de collage non détectés lors de la construction. Par suite, les jonctions s'affaiblissent et il est donc indispensable de surveiller périodiquement lesdites jonctions collées pour en connaître l'état.

L'examen complet non destructif des jonctions collées de la peau d'un aéronef pourrait être réalisé au moyen d'une sonde à ultrasons, émettrice ou réceptrice ou réunissant les deux fonctions. De façon connue, on afficherait sur un écran, pour l'évaluer, une variation anormale d'écho ultrasonore provoquée par un défaut de collage, détecté dans la zone explorée, par rapport à un écho normal connu et étalonné d'une zone saine.

Cependant, comme on le sait, la qualité des indications mesurables fournies par les sondes usuelles à ultrasons dépend du couplage ultrasonore entre la sonde et la pièce à étudier. Or, un tel couplage est réalisé par un corps gras (vaseline par exemple), que l'on doit enlever après la mesure par un essuyage soigneux.

Par suite, ce qui est possible pour une pièce de dimension raisonnable, s'avère inutilisable lorsqu'il s'agit de fuselages d'avions, notamment gros porteurs.

Il en résulte donc qu'il est pratiquement impossible de contrôler les jonctions d'un fuselage d'aéronef au moyen de sondes ultrasonores, nécessitant un moyen de couplage entre elles-mêmes et ledit fuselage.

On remarquera que l'on connaît déjà, par exemple par les documents US-A-3 628 375 et US-A-4 302 976, des sondes ultrasonores à roue, destinées à rouler sur des pièces à contrôler et ne nécessitant pas de moyen de couplage graisseux avec celles-ci. De telles sondes comportent un moyeu fixe portant au moins un transducteur à ultrasons, ainsi qu'un organe de roulement annulaire (roue) monté rotatif sur ledit moyeu et entourant ledit transducteur.

Dans ces sondes connues, le transducteur est logé dans une chambre étanche ménagée entre le moyeu et ladite roue et emplie d'un liquide de couplage ultrasonore, interne auxdites sondes. Ainsi, on assure la transmission des ultrasons entre le transducteur et la roue. Cependant, il en résulte de nombreux inconvénients :

- du fait du mouvement relatif de la roue par rapport au moyeu, le liquide de couplage est "battu", de sorte qu'il apparaît des bulles à l'intérieur dudit liquide, ces bulles perturbant les mesures ;
- quoique l'on prévoit des joints entre le moyeu et la roue, des fuites de liquide de couplage se produisent, notamment à travers les roulements ou les paliers par lesquels la roue est montée sur le moyeu ;
- de telles fuites entraînent donc elles aussi la formation de bulles et doivent donc être compensées ; pour cela, on prévoit un réservoir de liquide complémentaire, ce qui augmente l'encombrement desdites sondes.

Il résulte de ce qui précède que de telles sondes ultrasonores à roue ne pourraient pas non plus être utilisées pour contrôler les jonctions du fuselage d'un aéronef.

On remarquera de plus que, notamment par le document US-A-4 472 974, on connait une sonde de contrôle par ultrasons à roue, dans laquelle le transducteur à ultrasons est monté sur le moyeu par l'intermédiaire d'un support dont la face extérieure, opposée audit transducteur, délimite avec la face intérieure de ladite roue, une fente de glissement en rotation ; dans ce cas, le volume du liquide de couplage enfermé entre le moyeu et la roue est plus faible que dans les sondes des documents US-A-3 628 375 et US-A-4 302 976. Toutefois, une telle réalisation ne permet pas d'éliminer les inconvénients dus à la formation de bulles dans le liquide de couplage interne à la sonde et aux fuites de ce liquide vers l'extérieur de cette dernière.

La présente invention a pour objet de remédier à ces inconvénients et de permettre la réalisation de sondes susceptibles d'être utilisées notamment pour le contrôle des jonctions des fuselages d'aéronef.

A cette fin, selon l'invention, le dispositif de contrôle par ultra-sons, du type comportant un moyeu fixe portant au moins un transducteur à ultra-sons, ainsi qu'un organe de roulement annulaire monté rotatif sur ledit moyeu et entourant ledit transducteur, celui-ci étant monté sur le moyeu par l'intermédiaire d'un support dont la face extérieure, opposée audit transducteur, délimite avec la face intérieure dudit organe de roulement une fente de glissement en rotation, le couplage entre ledit support et ledit organe de roulement étant réalisé par l'intermédiaire d'un liquide de couplage pour ultra-sons se trouvant dans ladite fente, est remarquable en ce qu'il comporte un élément élastique spongieux imbibé dudit liquide de couplage, ledit élément étant logé dans un évidement dudit moyeu et s'appliquant élastiquement contre la face intérieure dudit organe de roulement.

Ainsi, lorsque ledit organe de roulement est appliqué sur une pièce à contrôler et est déplacé pour rouler sur celle-ci, ledit élément spongieux dépose une pellicule de liquide de couplage sur ladite face intérieure dudit organe de roulement. Cette pellicule permet alors le couplage ultrasonore du transducteur (par l'intermédiaire dudit support) avec ledit organe de roulement. On remarquera que grâce à l'invention, la quantité de liquide de couplage est extrêmement réduite et qu'il n'existe pas de liquide susceptible d'être "battu" par le mouvement relatif de l'organe de roulement par rapport au moyeu. Par suite, la formation de bulles est inexistante. De plus, à cause de son pouvoir de désorption et d'absorption instantanées de liquide de couplage, l'élément spongieux maintient l'équilibre entre le liquide qu'il contient et le liquide appliqué sur la face intérieure de l'organe de roulement. Le liquide désorbé n'est donc jamais en excès, de sorte que les risques de fuites de liquide vers l'extérieur sont également très faibles.

Pour réduire encore les risques de fuite de liquide vers l'extérieur, on peut prévoir, de part et d'autre dudit évidement contenant l'élément spongieux et coaxialement audit moyeu, des disques de matière spongieuse portés par ledit moyeu et s'appliquant par leur périphérie contre la face intérieure dudit organe de roulement. De préférence, chacun de ces disques est pressé entre une face d'appui dudit moyeu et le roulement ou le palier correspondant, servant au montage de l'organe de roulement par rapport au moyeu.

Avantageusement, on prévoit une rondelle rigide d'usure et de maintien entre un disque spongieux et le roulement ou le palier correspondant.

Dans un mode de réalisation avantageux, au lieu d'être collé sur son support, comme cela est usuel, le transducteur est plaqué contre celui-ci par l'intermédiaire de moyens de pression. On peut ainsi obtenir un meilleur centrage des faisceaux d'ultra-sons et un bon couplage ultra-sonore entre le transducteur et son support. Ces moyens de pression peuvent comporter un écrou pressant ledit transducteur par l'intermédiaire d'une pastille élastique et d'un guide rigide de centrage.

Avantageusement, ledit moyeu comporte un passage transversal à son axe, et, à l'intérieur dudit passage, sont agencés ledit support de transducteur, ledit transducteur, les moyens de pression du transducteur sur son support et ledit élément spongieux.

Les figures du dessin annexé feront bien comprendre comment l'invention peut être réalisée.

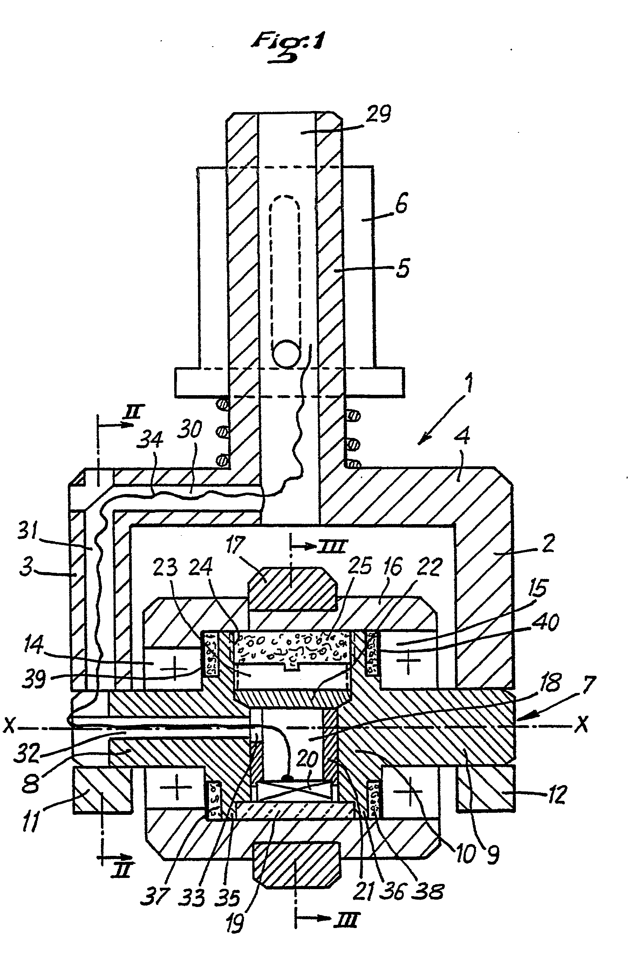

La figure 1 est une vue en coupe du dispositif selon l'invention.

La figure 2 est une vue en coupe partielle, selon la ligne II-II de la figure 1.

La figure 3 est une vue en coupe agrandie à travers la roue du dispositif, selon la ligne III-III de la figure 1.

Le mode de réalisation du dispositif selon l'invention, montré sur ces figures, comporte un équipage fixe constitué par un étrier 1, en forme de U, pourvu de deux branches parallèles 2 et 3 reliées l'une à l'autre par un dos 4. Ce dos 4 est solidaire d'une tige 5, pourvue de moyens 6 de fixation à un organe mobile non représenté.

Entre les branches parallèles 2 et 3 est maintenu un moyeu fixe 7, d'axe X-X, comportant deux queues d'extrémité 8 et 9, reliées par une partie centrale renflée 10 cylindrique. Le moyeu 7 est rendu solidaire de l'étrier 1 par l'intermédiaire de plaquettes de pression 11 et 12, qui, sous l'action de vis 13 bloquent lesdites queues d'extrémité 8 et 9 contre lesdites branches 2 et 3 de l'étrier 1.

De part et d'autre de la partie centrale renflée 10 du moyeu 7 sont agencés des roulements à billes 14 et 15, grâce auxquels une jante cylindrique 16 peut tourner autour du moyeu 7. Une bague de roulement 17 est solidaire de la jante 16.

La partie centrale renflée 10 du moyeu 7 est percée d'un passage 18, transversal à l'axe X-X. L'extrémité du passage 18 dirigée vers l'extérieur de l'étrier 1 est obturée par une fenêtre 19, par exemple en une matière comme le PLEXIGLAS (marque déposée), supportant un cristal piézo-électrique 20 constituant le transducteur à ultra-sons. Ce cristal est pressé contre la fenêtre 19 par l'intermédiaire d'un tube de centrage 21 s'emboîtant partiellement à la périphérie dudit cristal, sans entraver les vibrations axiales de celui-ci. Le tube de centrage 21 est poussé vers le cristal 20 par une pastille élastique 22, elle-même pressée par un écrou 23 se vissant dans une partie filetée du passage 18.

Du côté de l'écrou 23, opposé au cristal piézo-électrique 20, le passage 18 ménage un évidement 24, dans lequel est disposé un élément spongieux 25, imbibé d'un liquide apte au couplage ultrasonore.

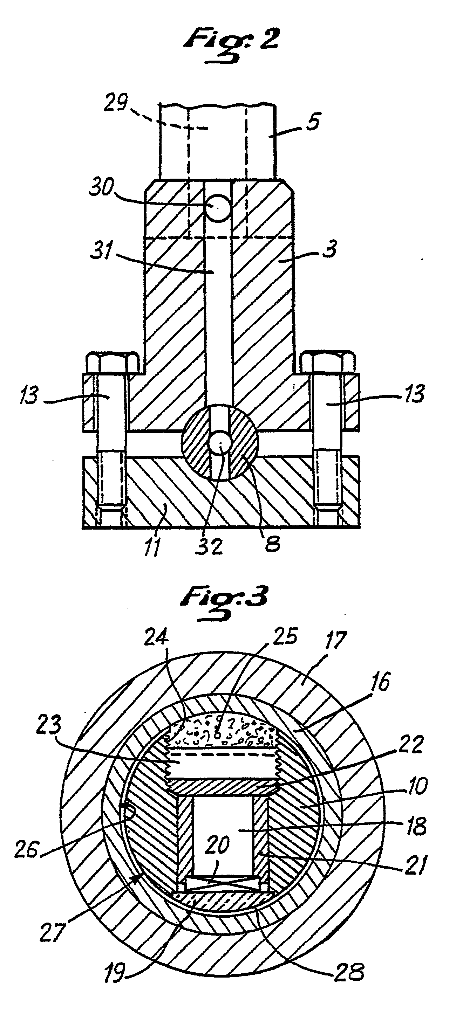

Entre la face intérieure 26 de la jante 16 et la face extérieure 27 de la partie centrale renflée cylindrique 10, est ménagée une fente annulaire 28, visible sur la figure 3, où son épaisseur a été exagérée à des fins de clarté.

L'élément spongieux 25 s'applique contre la face intérieure 26 de la jante 16.

La tige 5, le dos 4, la branche 3, la queue 8 et le tube de centrage 21 sont percés de canaux ou orifices 29 à 33, respectivement, destinés au passage de conducteurs 34 reliant le cristal piézo-électrique 20 à l'extérieur.

Par ailleurs, dans les épaulements reliant la partie centrale 10 aux queues 8 et 9, sont pratiqués des appuis 35 et 36 pour des rondelles 37 et 38 d'une matière spongieuse. Les rondelles 37 et 38 s'appuient contre les roulements 14 ou 15, par l'intermédiaire de rondelles rigides d'usure et de maitien 39 et 40, respectivement. La périphérie des rondelles spongieuses 37 et 38 est au contact de la face intérieure 26 de la jante 16.

Ainsi, lorsque la bague de roulement 17 est appliquée sur une pièce à contrôler (non représentée) et que le dispositif est déplacé de façon que ladite bague roule, l'élément spongieux 25 emplit la fente 28 de liquide de couplage, de sorte que le transducteur à ultra-sons 20 peut être couplé à ladite pièce par l'intermédiaire de la fenêtre de support 19, de la pellicule de liquide emplissant la fente 28, de la jante 16 et de la bande de roulement 17.

Comme expliqué ci-dessus, la formation de bulles dans le liquide de couplage et les fuites de celui-ci à travers les roulements 14 et 15 sont empêchées par l'élément spongieux 25 et les rondelles 37 et 38.

Les contacts électrique et mécanique entre le cristal piézo-électrique 20, la fenêtre 19 et le moyeu 7 peuvent être assurés de toute façon connue, par exemple à l'aide de clinquant et de graisse (non représentés).

Avantageusement, le moyeu 7 est réalisé en acier inoxydable, de façon à ce que les pertes d'énergie ultra-sonore soient faibles le long de l'axe X-X.

On voit ainsi que, grâce à l'invention :
- on élimine la formation de bulles dans le liquide de couplage interne et on évite les fuites par les roulements de montage de la roue sur son moyeu ;
- on obtient une sonde entièrement et facilement démontable, ce qui facilite l'entretien et les réparations ;
- on obtient une sonde peu encombrante, puisque la quantité de liquide de couplage est faible ;
- on obtient une sonde dont le rendement acoustique est élevé, du fait de la directionnalité d'émission et/ou de réception procurée par la fenêtre 19.

**Revendications**

1 - Dispositif de contrôle par ultra-sons du type comportant un moyeu fixe (7) portant au moins un transducteur à ultra-sons (20) ainsi qu'un organe de roulement annulaire (16,17) monté rotatif sur ledit moyeu (7) et entourant ledit transducteur (20), celui-ci étant monté sur le moyeu (7) par l'intermédiaire d'un support (19) dont la face extérieure, opposée audit transducteur (20), délimite avec la face intérieure (26) dudit organe de roulement, une fente (28) de glissement en rotation, le couplage entre ledit support (19) et ledit organe de roulement (16,17) étant réalisé par l'intermédiaire d'un liquide de couplage pour ultra-sons se trouvant dans ladite fente, caractérisé en ce qu'il comporte un élément élastique spongieux (25) imbibé dudit liquide de couplage, ledit élément (25) étant logé dans un évidement (24) dudit moyeu (7) et s'appliquant élastiquement contre la face intérieure (26) dudit organe de roulement (16, 17).

2 - Dispositif selon la revendication 1, caractérisé en ce que, de part et d'autre dudit évidement (24) contenant l'élément spongieux (25) et coaxialement audit moyeu (7), sont disposés des disques (37,38) de matière spongieuse portés par ledit moyeu (7) et s'appliquant par leur périphérie contre la face intérieure (26) dudit organe de roulement (16, 17).

3 - dispositif selon la revendication 2, caractérisé en ce que chacun desdits disques (37,38) est pressé entre une face d'appui (35,36) dudit moyeu (7) et le roulement ou le palier (14, 15) correspondant, servant au montage de l'organe de roulement par rapport audit moyeu.

4 - Dispositif selon la revendication 3, caractérisé en ce que l'on prévoit une rondelle rigide d'usure et de maintien (39,40) entre un disque spongieux (37,38) et le roulement ou le palier correspondant (14, 15).

5 - Dispositif selon l'une quelconque des revendications 1 à 4, caractérisé en ce que ledit transducteur (20) est plaqué contre ledit support (19) par l'intermédiaire de moyens de pression (21,22,23).

6 - Dispositif selon la revendication 5, caractérisé en ce que lesdits moyens de pression comportent un écrou (23) pressant ledit transducteur (20) par l'intermédiaire d'une pastille élastique (22) et d'un guide de centrage (21).

7 - Dispositif selon l'une des revendications 5 ou 6, caractérisé en ce que ledit moyeu (7) comporte un passage (18) transversal à son axe (X-X), et, à l'intérieur dudit passage, sont agencés ledit support (19) du transducteur, ledit transducteur (20), les moyens (21,22,23) de pression du transducteur sur son support et ledit élément spongieux (25).

8 - Dispositif selon l'une quelconque des revendications 6 ou 7, caractérisé en ce que le guide de centrage (21) s'emboîte sur la périphérie dudit transducteur (20) sans en amortir les vibrations axiales.

**Patentansprüche**

1. Ultraschallprüfvorrichtung, welche eine feststehende Nabe (7) aufweist, welche mindestens einen Ultraschallumformer (20) wie auch einen ringförmigen Laufteil (16, 17) trägt, welcher rotierbar auf der genannten Nabe (7) gelagert ist und den genannten Umformer (20) umgibt, wobei dieser an der Nabe (7) mittels eines Trägers (19) gelagert ist, dessen äußere Fläche, welche dem genannten Umformer (20) gegenüberliegt, mit der Innenfläche (26) des genannten Laufteiles einen Rotationsgleitspalt (28) begrenzt, wobei die Kupplung zwischen genanntem Träger (19) und genanntem Laufteil (16, 17) mittels einer Kupplungsflüssigkeit für Ultraschall, welche sich in dem genannten Spalt befindet, hergestellt ist, dadurch gekennzeichnet, daß sie ein schwammartiges elastisches Element (25) aufweist, welches mit der genannten Kupplungsflüssigkeit durchtränkt ist, wobei das genannte Element (25) in einer Ausnehmung (24) der genannten Nabe (7) untergebracht ist und sich elastisch gegen die Innenfläche (26) des genannten Laufteiles (16, 17) anlegt.

2. Vorrichtung nach Anspruch 1, dadurch gekennzeichnet, daß beiderseits der genannten Ausnehmung (24), welche das schwammartige Element (25) und koaxial zur genannten Nabe (7) enthält, Scheiben (37, 38) aus schwammartigem Material angeordnet sind, welche durch die genannte Nabe (7) getragen sind und sich an ihrer Peripherie gegen die Innenfläche (26) des genannten Laufteiles (16, 17) anlegen.

3. Vorrichtung nach Anspruch 2, dadurch gekennzeichnet, daß jede genannte Scheibe (37, 38) zwischen eine Anlagefläche (35, 36) der genannten Nabe (7) und das Wälzlager oder das entsprechende Lager (14, 15) gepreßt ist, welches der Lagerung des Laufteiles in bezug auf die genannte Nabe dient.

4. Vorrichtung nach Anspruch 3, dadurch gekennzeichnet, daß man eine steife Unterlags- und Haltescheibe (39, 40) zwischen einer schwammartigen Scheibe (37, 38) und dem Wälzlager oder entsprechendem Lager (14, 15) vorsieht.

5. Vorrichtung nach einem der Ansprüche 1 bis 4, dadurch gekennzeichnet, daß der genannte Umformer (20) gegen den genannten Träger (19) mittels Druckmittel (21, 22, 23) belegt ist.

6. Vorrichtung nach Anspruch 5, dadurch gekennzeichnet, daß die genannten Druckmittel eine Mutter (23) aufweisen, welche den genannten Umformer (20) mittels eines elastischen Plättchens (22) und einer Zentrierungsführung (21) preßt.

7. Vorrichtung nach einem der Ansprüche 5 und 6, dadurch gekennzeichnet, daß die genannte Nabe (7) einen quer zu ihrer Achse (X-X) verlaufenden Kanal (18) aufweist und daß im Inneren des genannten Kanals der genannte Träger (19) für den Umformer, der genannte Umformer (20), die Druckmittel (21, 22, 23) für den Umformer auf dessen Träger und das besagte schwammartige Element (25) angeordnet sind.

8. Vorrichtung nach einem der Ansprüche 6 oder 7, dadurch gekennzeichnet, daß die Zentrierungsführung (21) sich in der Peripherie des genannten Umformers (20) einfügt, ohne dabei die achsialen Vibrationen zu dämpfen.

**Claims**

1. Ultrasonic testing device of the type comprising a fixed hub (7) with at least one ultrasonic transducer (20) as well as an annular rolling member (16, 17) mounted for rotation on said hub (7) and surrounding said transducer (20) this latter being mounted on the hub (7) through a support (19) whose external face, opposite said transducer (20), defines with the inner face (26) of said rolling member a rotational sliding slit (28), the coupling between said support (19) and said rolling member (16, 17) being provided by an ultrasonic coupling liquid present in said slit, characterized in that it comprises a spongy resilient element (25) imbibed with said coupling liquid, said element (25) being housed in a recess (24) in said hub (7) and being applied resiliently against the inner face (26) of said rolling member (16, 17).

2. Device according to claim 1, characterized in that on each side of said recess (24) containing the spongy element (25) and coaxially with said hub (7), are disposed disks (37, 38) of a spongy material carried by said hub (7) and applied by their periphery against the inner face (26) of said rolling member (16, 17).

3. Device according to claim 2, characterized in that each of said disks (37, 38) is pressed between a bearing face (35, 36) of said hub (7) and the corresponding bearing (14, 15) serving for mounting the rolling member with respect to said hub.

4. Device according to claim 3, characterized in that a rigid wear and holding washer (39, 40) is provided between a spongy disk (37, 38) and the corresponding bearing (14, 15).

5. Device according to any one of claims 1 to 4, characterized in that said transducer (20) is applied against said support (19) by pressure means (21, 22, 23).

6. Device according to claim 5, characterized in that said pressure means comprise a nut (23) pressing said transducer (20) through a resilient wafer (22) and a centering guide (21).

7. Device according to claim 5 or 6, characterized in that said hub (7) comprises a passage (18) transversal to its axis (X-X) and, inside said passage, are arranged said support (19) for the transducer, said transducer (20), the means (21, 22, 23) for pressing the transducer on its support and said spongy element (25).

8. Device according to claim 6 or 7, characterized in that the centering guide (21) fits over the periphery of said transducer (20) without damping the axial vibrations thereof.

*Fig.1*

## Fig. 2

## Fig. 3